# EUROPEAN PATENT APPLICATION

(11) **EP 4 672 686 A1**
(43) Date of publication of application: **31.12.2025**
(21) Application number: 24784012.7
(22) Date of filing: 07.03.2024
(51) Int. Cl.: H04L 27/26, H04L 5/00

(54) **METHOD AND APPARATUS FOR DETERMINING CYCLIC PREFIX EXTENSION, AND FIRST TERMINAL**

(30) Priority: 06.04.2023 CN 202310361788
(71) Applicant: CICT Connected and Intelligent Technologies Co., Ltd., Chongqing 400041 (CN)
(72) Inventor: WEN, Xiaoran, Chongqing 400041 (CN); ZHAO, Rui, Chongqing 400041 (CN); WANG, Yakun, Chongqing 400041 (CN)
(74) Representative: Murgitroyd & Company
(86) International application number: PCT/CN2024/080528
(87) International publication number: WO 2024/207927

(57) **Abstract**

Provided in the present application are a method and an apparatus for determining a cyclic prefix extension (CPE), and a first terminal, wherein the method is applied to a first terminal. The method comprises: according to transmission type information that a first transmission meets, determining a CPE starting position corresponding to a target transmission resource for the first transmission, wherein the transmission type information comprises at least one of the following: belonging to a transmission after a first channel access type; belonging to a transmission after a second channel access type; there being no available shared channel occupancy information; there being one piece of available shared channel occupancy information; there being at least two pieces of available shared channel occupancy information; or belonging to a continuous multi-slot transmission.

## Description

### CROSS-REFERENCE TO RELATED APPLICATIONS

The present application claims priority to Chinese Patent Application No. 202310361788.8, filed in China on April 6, 2023, which is incorporated herein by reference in its entirety.

### TECHNICAL FIELD

The present application relates to the field of communications technologies, and in particular, to a method and an apparatus for determining a cyclic prefix extension, and a first terminal.

### BACKGROUND

In new radio operating on an unlicensed frequency band (New Radio in-UnlicensedSpectrum, NR-U), when user equipment (User Equipment, UE, which is also a terminal) is scheduled to perform an uplink transmission, a base station indicates, by using downlink control information (Downlink Control Information, DCI), a channel access manner corresponding to the uplink transmission of the UE. Because some channel access manners need to satisfy a gap requirement of 16 us or 25 us, the UE may ensure a gap size between two transmissions by transmitting a cyclic prefix extension (Cyclic Prefix Extension, CPE). Correspondingly, the base station may indicate a CPE length of the 1^{st} symbol of the uplink transmission of the UE.

Currently, in a sidelink (Sidelink, SL), the UE needs to transmit data through autonomous scheduling. However, when there is no assistance from the base station, there is currently no feasible solution for how the UE independently determines a CPE length to ensure a timely and reliable transmission of a sidelink service on an unlicensed frequency band.

### SUMMARY

The present application provides a method and an apparatus for determining a cyclic prefix extension, and a first terminal, to solve a problem of how a terminal independently determines a CPE length without assistance from a base station.

According to a first aspect, an embodiment of the present application provides a method for determining a cyclic prefix extension, applied to a first terminal, and the method includes:
determining, based on transmission type information that is satisfied by a first transmission, a cyclic prefix extension CPE starting position corresponding to a target transmission resource of the first transmission;
where the transmission type information includes at least one of the following:
being a transmission after channel access is performed by Type 1 channel access procedure;
being a transmission after channel access is performed by Type 2 channel access procedure;
having no available shared channel occupancy information;
having one piece of available shared channel occupancy information;
having at least two pieces of available shared channel occupancy information; or
being a multi-consecutive slots transmission.

According to a second aspect, an embodiment of the present application provides a first terminal. The first terminal includes a transceiver, a memory, a processor, and a computer program stored in the memory and runnable on the processor. When the processor executes the computer program, the method for determining a cyclic prefix extension in the first aspect is implemented.

According to a third aspect, an embodiment of the present application provides an apparatus for determining a cyclic prefix extension, applied to a first terminal, and the apparatus includes:
a first determining module, configured to determine, based on transmission type information that is satisfied by a first transmission, a CPE starting position corresponding to a target transmission resource of the first transmission;
where the transmission type information includes at least one of the following:
being a transmission after channel access is performed by Type 1 channel access procedure;
being a transmission after channel access is performed by Type 2 channel access procedure;
having no available shared channel occupancy information;
having one piece of available shared channel occupancy information;
having at least two pieces of available shared channel occupancy information; or
being a multi-consecutive slots transmission.

According to a fourth aspect, an embodiment of the present application provides a computer-readable storage medium. The computer-readable storage medium stores a computer program. When the computer program is executed by a processor, the method for determining a cyclic prefix extension in the first aspect is implemented.

Beneficial effects of the foregoing technical solutions in the present application are as follows:
In the foregoing solutions, a first terminal determines, based on transmission type information that is satisfied by a first transmission, a cyclic prefix extension CPE starting position corresponding to a target transmission resource of the first transmission, where the transmission type information includes at least one of the following: being a transmission after channel access is performed by Type 1 channel access procedure; being a transmission after channel access is performed by Type 2 channel access procedure; having no available shared channel occupancy information; having one piece of available shared channel occupancy information; having at least two pieces of available shared channel occupancy information; or being a multi-consecutive slots transmission. In this way, the terminal can independently determine a CPE length without assistance from a base station, thereby ensuring that a sidelink service on an unlicensed frequency band can be transmitted in a timely and reliable manner.

### BRIEF DESCRIPTION OF THE DRAWINGS

FIG. 1 is a flowchart of a method for determining a cyclic prefix extension according to an embodiment of the present application.
FIG. 2 is a schematic diagram 1 of a CPE according to an embodiment of the present application.
FIG. 3 is a schematic diagram 2 of a CPE according to an embodiment of the present application.
FIG. 4 is a schematic diagram 3 of a CPE according to an embodiment of the present application.
FIG. 5 is a schematic diagram 4 of a CPE according to an embodiment of the present application.
FIG. 6 is a schematic diagram 5 of a CPE according to an embodiment of the present application.
FIG. 7 is a schematic diagram 6 of a CPE according to an embodiment of the present application.
FIG. 8 is a structural block diagram of an apparatus for determining a cyclic prefix extension according to an embodiment of the present application.
FIG. 9 is a schematic diagram of a hardware structure of a first terminal according to an embodiment of the present application.

### DETAILED DESCRIPTION OF THE EMBODIMENTS

To make the technical problems to be solved, technical solutions, and advantages of the present application clearer, the following describes the present application in detail with reference to the accompanying drawings and specific embodiments. In the following description, specific details such as specific configurations and components are provided only to help fully understand the embodiments of the present application. Therefore, a person skilled in the art should understand that various changes and modifications may be made to the embodiments described herein without departing from the scope and spirit of the present application. In addition, for clarity and simplicity, descriptions of known functions and constructions are omitted.

It should be understood that, "one embodiment" and "an embodiment" mentioned throughout this specification means that specific features, structures, or characteristics related to embodiments may be included in at least one embodiment of the present application. Therefore, descriptions of "in one embodiment" or "in an embodiment" in various places throughout this specification are unnecessary to refer to a same embodiment. In addition, the specific features, structures, or characteristics may be combined in one or more embodiments in any appropriate manner.

In embodiments of the present application, it should be understood that, sequence numbers of the following processes do not mean execution sequences. The execution sequences of the processes should be determined according to functions and internal logic of the processes, and should not be construed as any limitation on the implementation processes of the embodiments of the present application.

In addition, the terms "system" and "network" in this specification may often be used interchangeably.

In embodiments provided in the present application, it should be understood that, "B corresponding to A" means that B is associated with A, and B may be determined based on A. However, it should be further understood that determining B based on A does not mean that B is determined based on only A. B may alternatively be determined based on A and/or other information.

The following clearly and completely describes the technical solutions in embodiments of the present application with reference to the accompanying drawings in embodiments of the present application. Apparently, the described embodiments are merely some but not all of embodiments of the present application. All other embodiments obtained by a person of ordinary skill in the art based on embodiments of the present application without creative efforts shall fall within the protection scope of the present application.

### I. Channel access process of NR-U

A channel access process on a shared spectrum is a sensing (sensing)-based process for evaluating the availability of a channel used to perform a transmission. A basic unit for sensing is a sensing slot (slot) with a length Tₛₗ = 9 us. If an eNB/gNB or UE performs sensing in a sensing slot (sensing slot) and determines that monitored energy of at least 4 us in the sensing slot is less than an energy detection threshold X_{Thresh}, it is considered that the sensing slot is idle; otherwise, it is considered that sensing slot duration (sensing slot duration) Tₛₗ is busy.

Channel access processes of an NR-U system are classified into Type 1 and Type 2. Type 2 is classified into a Type 2A channel access manner, a Type 2B channel access manner, and a Type 2C channel access manner. The foregoing two channel access processes are described below by using a downlink channel access manner as an example.

### 1. Type 1 (which may be referred to as a first channel access type or a channel access type 1):

An eNB/gNB may sense, in sensing slot duration of back-off time Td, that a channel is idle, and performs a transmission after a value of a counter N in Step 4 is 0. The counter N performs sensing on additional sensing slot duration based on the following steps 1 to 6, so as to perform adjustment.

Step 1: Setting N = Ninit, where Ninit is a random number evenly distributed between 0 and CWp; and performing Step 4.

Step 2: If N > 0 and the eNB/gNB choose to reduce a value of the counter, setting N = N - 1.

Step 3: Detecting a channel in additional sensing slot duration; and if the additional sensing slot duration is idle, performing Step 4; otherwise, performing Step 5.

Step 4: If N = 0, stopping; otherwise, performing Step 2.

Step 5: Detecting a channel until a busy sensing slot is detected in additional back-off time Td or all sensing slots in the additional back-off time Td are idle.

Step 6: If all sensing slots in Td are idle, performing Step 4; otherwise, performing Step 5.

Td consists of Tf = 16 us followed by mp consecutive sensing slot duration Tsl, and Tf includes one idle sensing slot duration Tsl located at the beginning of Tf.

*CW_{min,p}* ≤ *CWₚ* ≤ *CW_{max,p}* is a contention window, *CW_{min,p}* and *CW_{max,p}* are selected before Step 1, *mₚ*, *CW_{min,p},* and *CW_{max,p}* are based on a channel access priority class p related to the transmission of the eNB/gNB, and the eNB/gNB cannot perform a transmission on a channel that exceeds channel occupancy time *T_{m cot,p}*.

Specifically, the following Table 1 describes a channel access priority class (Channel Access Priority Class, CAPC).

**Table 1: Channel access priority class**

| Channel Access Priority Class (*p*) | *mₚ* | *CW_{min,p}* | *CW_{max, p}* | *T_{m cot,p}* | Allowed *CWₚ* sizes |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

2. Type 2 (which may be referred to as a second channel access type or a channel access type 2), which specifically includes the following three types: Type 2A, Type 2B and Type 2C.

Type 2A channel access is only applied to the following transmission performed by the eNB/gNB:
a transmission initiated by the eNB, including a discovery burst, including no PDSCH, and maximum transmission duration being 1 ms;
a transmission initiated by the gNB and consisting only of a discovery burst or a discovery burst multiplexed with non-unicast information, where transmission duration is at most 1 ms, and a duty cycle of the discovery burst is at most 1/20; or
a transmission of the eNB/gNB that is performed 25 us later than a transmission performed by UE on a shared channel.

Type 2B channel access or Type 2C channel access is respectively applied to a case in which a transmission of the gNB is 16 us or at most 16 us after the transmission occupied by the UE on the shared channel.

### Type 2A:

The eNB/gNB may perform a DL transmission immediately when a sensing channel is idle for at least one sensing interval *T_{short_dl}* = 25 *us. T_{short_dl}* consists of Tf = 16 us followed by one sensing slot, and Tf includes one sensing slot located at the beginning of Tf. If it is detected that both two sensing slots of *T_{short_dl}* are idle, it is considered that the channel is idle for *T_{short_dl}*.

### Type 2B:

The gNB may transmit a DL transmission immediately when a sensing channel is idle for one *T_{f}* = 16 *us.* Tf includes a sensing slot of 9 us that is located at the end of Tf. If it is sensed that idle time of the channel is at least 5 us and at least 4 us is within the sensing slot, it is considered that the channel is idle within the duration Tf.

### Type 2C:

The gNB does not perform channel sensing before a downlink transmission. Downlink transmission time is at most 584 us.

In addition, if the gNB shares channel occupancy initiated by the UE by using a channel occupancy procedure, the gNB may perform a transmission after a UL transmission for scheduling a resource, or after a gap from a resource configured for a PUSCH transmission of the UE, as detailed below.

The transmission needs to include a transmission to the UE that initiates channel occupancy and may include non-unicast and/or unicast transmission. Any unicast transmission including user plane data is performed for only the UE that initiates channel occupancy.

If the gap is 25 us or 16 us, the gNB may perform a transmission after completing Type 2A or 2B channel access.

If the gap is less than 16 us, the gNB may perform a transmission after completing Type 2C channel access.

Whenr a gNB initiates a transmission by using the Type 1 channel access procedure and shares corresponding channel occupancy with the UE, and if an interval between any two transmissions within channel occupancy of the gNB does not exceed 25 us, the gNB may perform a transmission after a transmission of the UE in channel occupancy of the gNB. In this case, if the gap is 25 us or 16 us, the gNB may perform a transmission after completing Type 2A or 2B channel access; and if the gap is less than 16 us, the gNB may perform a transmission after completing Type 2C channel access.

### II. CPE of NR-U

In NR-U, when UE is scheduled to perform a transmission of a PUSCH or a PUCCH, a base station may indicate a corresponding channel access manner of the PUSCH or the PUCCH by using DCI that carries a UL grant or a DL grant. Because some channel access manners need to satisfy a gap requirement of 16 us or 25 us, the UE may ensure a gap size of two transmissions by transmitting a CPE. Correspondingly, the base station may indicate a CPE length of the 1^{st} symbol of an uplink transmission of the UE. The base station may explicitly indicate channel access parameters such as a CPE length, a channel access manner, or a channel access priority class to the UE in a joint coding manner. Different channel access indications are introduced in different DCI formats. DCI format 0_0 is used as an example:

### Back-off uplink grant (DCI format 0_0) for scheduling a PUSCH transmission

A set of joint indications of a preconfigured channel access manner and a CPE length is shown in Table 2 below:

**Table 2**

| LBT indication | Channel access manner | CPE length |
|---|---|---|
| 0 | Type 2C | C2 * Symbol length - 16 us - T_{TA} |
| 1 | Type 2A | C3 * Symbol length - 25 us - T_{TA} |
| 2 | Type 2A | C1 * Symbol length - 25 us |
| 3 | Type 1 | 0 |

When a subcarrier spacing is 15 kHz and 30 kHz, C1 = 1;and when the subcarrier spacing is 60 kHz, C1 = 2. C2 and C3 are configured by higher layer parameters *cp-ExtensionC2* and *cp-ExtensionC3,* respectively. When the subcarrier spacing is 15 kHz or 30 kHz, a value range of C2 and C3 is 1 to 28; and when the subcarrier spacing is 60 kHz, the value range of C2 and C3 is 2 to 28. T_{TA} is a timing advance between DL and UL, and *T*_{TA} = (*N*_{TA} + *N*_{TA,offset})*T*_{c}.

LBT indication information including 2 bits is used to indicate a channel access manner and a CPE length that are used for joint coding.

The channel access manner and the CPE length are used for a PUSCH transmission.

If the channel access manner is Type 1, the UE selects a channel access priority class based on a service priority.

It may be learned from the foregoing description that both the channel access manner and the CPE length of the NR-U in a related technology are indicated by the base station. The UE may confirm, based on received indication information, a channel access manner and a CPE length that are used, and a case in which the UE cannot perform a transmission due to an improper CPE length configuration may be avoided. However, in a sidelink (Sidelink), the UE needs to independently determine a transmission resource without assistance from the base station, and correspondingly transmit a CPE. If two transmissions are located in a same slot but CPE lengths of the two transmissions are different, a transmission with a relatively short CPE length may be discarded due to an LBT failure. Therefore, to ensure a timely and reliable transmission of a sidelink service, a CPE transmission manner applicable to sidelink channel access (SL-U) needs to be considered.

Specifically, embodiments of the present application provide a method and an apparatus for determining a cyclic prefix extension, and a first terminal, thereby solving a problem in a related technology of how a terminal independently determines a CPE length without assistance from a base station.

### Embodiment 1

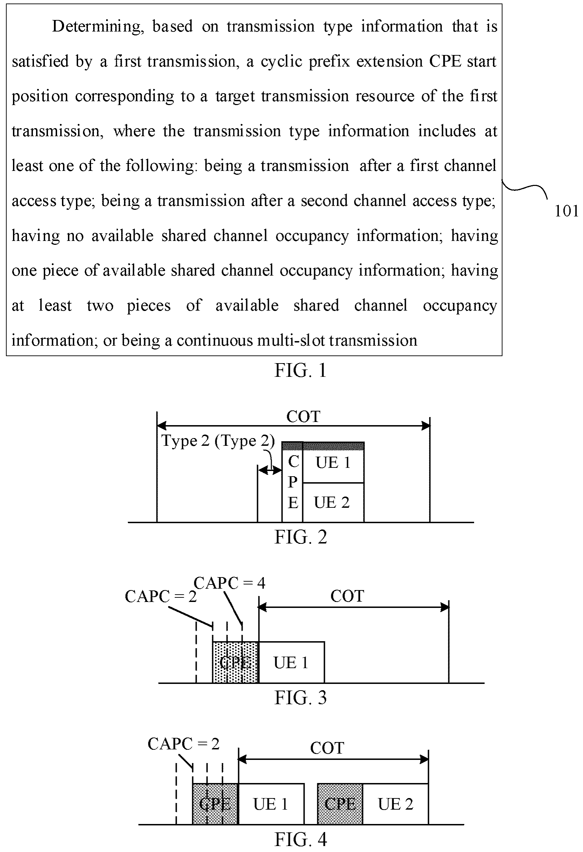

As shown in FIG. 1, an embodiment of the present application provides a method for determining a cyclic prefix extension. The method is applied to a first terminal and specifically includes the following step 101.

Step 101: based on transmission type information that is satisfied by a first transmission, a cyclic prefix extension CPE starting position corresponding to a target transmission resource of the first transmission is determined.

The transmission type information includes at least one of the following:
being a transmission after channel access is performed by Type 1 channel access procedure;
being a transmission after channel access is performed by Type 2 channel access procedure;
having no available shared channel occupancy information;
having one piece of available shared channel occupancy information;
having at least two pieces of available shared channel occupancy information; or
being a multi-consecutive slots transmission.

Herein, the first channel access type refers to the foregoing Type 1 channel access type, and the second channel access type refers to the foregoing Type 2 channel access type.

Optionally, the first transmission includes at least one of the following: a current physical sidelink control channel PSCCH transmission, a current physical sidelink shared channel PSSCH transmission, a transmission in any slot in the multi-consecutive slots transmission, or a transmission in the 1^{st} slot in the multi-consecutive slots transmission.

In the foregoing embodiment, the first terminal determines, based on the transmission type information that is satisfied by the first transmission, the CPE starting position corresponding to the target transmission resource of the first transmission. In this way, the terminal can independently determine a CPE length without assistance from a base station, thereby ensuring that a sidelink service on an unlicensed frequency band can be transmitted in a timely and reliable manner.

Different cases of determining the CPE starting position of the first transmission are described below based on the transmission type information that is satisfied by the first transmission.

Case 1: The first transmission is the transmission after the first channel access type, and/or the first transmission has no available shared channel occupancy information.

In an embodiment, in the foregoing Step 101, the process of determining, based on the transmission type information, the CPE starting position corresponding to the target transmission resource of the first transmission includes:
when the first transmission is the transmission after the first channel access type, and/or the first transmission has no available shared channel occupancy information, determining that the CPE starting position corresponding to the target transmission resource of the first transmission is one of the following:
a default first CPE starting position;
a CPE starting position that is randomly selected from preconfigured CPE starting positions;
a CPE starting position to which a channel access priority class CAPC of the first transmission is mapped; or
a CPE starting position to which a proximity per-packet priority PPPP of the first transmission is mapped.

Optionally, during specific implementation, the default first CPE starting position is mainly applied to the following scenario: If a transmission of the terminal is used to initiate a segment of channel occupancy, that is, the terminal accesses a channel in the Type 1 channel access manner, the default first CPE starting position may be used for a CPE of this transmission. For example, a longest CPE configured or preconfigured by a higher layer is used by default to ensure that UE can successfully initiate a segment of channel occupancy.

Optionally, the default first CPE starting position is a fixed CPE starting position configured or preconfigured by the higher layer.

Optionally, during specific implementation, for a terminal that uses the Type 1 (first channel access type) channel access manner, or a terminal that initiates a segment of channel occupancy, a CPE starting position used for the first transmission may alternatively be determined, based on a CAPC or a PPPP value of a transmission of the terminal, from a plurality of CPE starting positions configured in a resource pool.

For example, as shown in FIG. 3, it is assumed that UE 1 needs to perform a transmission whose CAPC is 2, a CPE starting position may be determined based on a CPE starting position to which the CAPC 2 is mapped.

In the foregoing embodiment, the default first CPE starting position is used, it can be ensured that CPE starting positions used for transmissions are the same, thereby resolving a problem that because two transmissions are located in a same slot but have different CPE lengths, a transmission with a shorter CPE length is discarded due to an LBT failure. Alternatively, the CPE starting position is determined based on a CAPC or a PPPP value, so that a transmission with a higher priority can access a channel preferentially, thereby ensuring a reliable transmission of a delay-sensitive (that is, having a higher requirement for a delay) service. Alternatively, one CPE starting position is randomly selected from preconfigured CPE starting positions, thereby determining the CPE starting position simpler and more efficient.

Case 2: The first transmission is the transmission after the second channel access type, and/or the first transmission has one piece of available shared channel occupancy information.

In an embodiment, in the foregoing Step 101, the process of determining, based on the transmission type information, the CPE starting position corresponding to the target transmission resource of the first transmission includes:
when the first transmission is the transmission after the second channel access type, and/or the first transmission has one piece of available shared channel occupancy information, determining that the CPE starting position corresponding to the target transmission resource of the first transmission is one of the following:
a default second CPE starting position;
a CPE starting position that is randomly selected from preconfigured CPE starting positions;
a CPE starting position to which a CAPC of the first transmission is mapped;
a CPE starting position to which a PPPP of the first transmission is mapped;
a CPE starting position to which a CAPC of a second transmission is mapped, where the second transmission is a transmission of a second terminal that initiates shared channel occupancy;
a CPE starting position to which a PPPP of the second transmission is mapped; or
a CPE starting position indicated in the shared channel occupancy information.

Optionally, during specific implementation, the default second CPE starting position is mainly applied to the following scenario: If a transmission of the terminal is used to perform a transmission in a segment of shared channel occupancy, that is, the terminal accesses a channel in the Type 2 channel access manner, the default second CPE starting position may be used for a CPE of this transmission. The default second CPE starting position is a fixed CPE starting position configured or preconfigured by a higher layer.

For example, as shown in FIG. 2, UE 1 and UE 2 use, by default, a shortest CPE configured or preconfigured by the higher layer, so as to ensure that transmissions of different UEs do not affect each other.

Optionally, during specific implementation, for a terminal that uses the Type 2 (second channel access type) channel access manner, or a terminal that shares a segment of channel occupancy, a CPE starting position used for a transmission may be determined, based on received shared channel occupancy information, from a plurality of CPEs configured in a resource pool. For example, a corresponding CPE starting position is determined based on a CAPC indicated in the received shared channel occupancy information.

For example, as shown in FIG. 4, UE 1 whose CAPC is 2 accesses a channel in the Type
1 channel access manner, and shares channel occupancy information with UE 2 whose CAPC is 1. In this case, when the UE 2 performs a transmission in channel occupancy time (Channel Occupancy Time Cot, COT), a CPE length of a transmission of the UE 2 may be determined based on a CAPC (that is, CAPC = 2) indicated in received shared occupancy information transmitted by the UE 1. In other words, when a CAPC of the transmission of the UE 2 is different from that of the UE 1, the CPE length of the transmission of the UE 2 may be determined by using the CAPC indicated in shared channel occupancy information transmitted by the UE 1.

Optionally, during specific implementation, for a terminal that uses the Type 2 (second channel access type) channel access manner, or a terminal that shares a segment of channel occupancy, a CPE starting position used for the first transmission may be determined, based on a CAPC or a PPPP value of a transmission of the terminal, from a plurality of CPE starting positions configured in a resource pool.

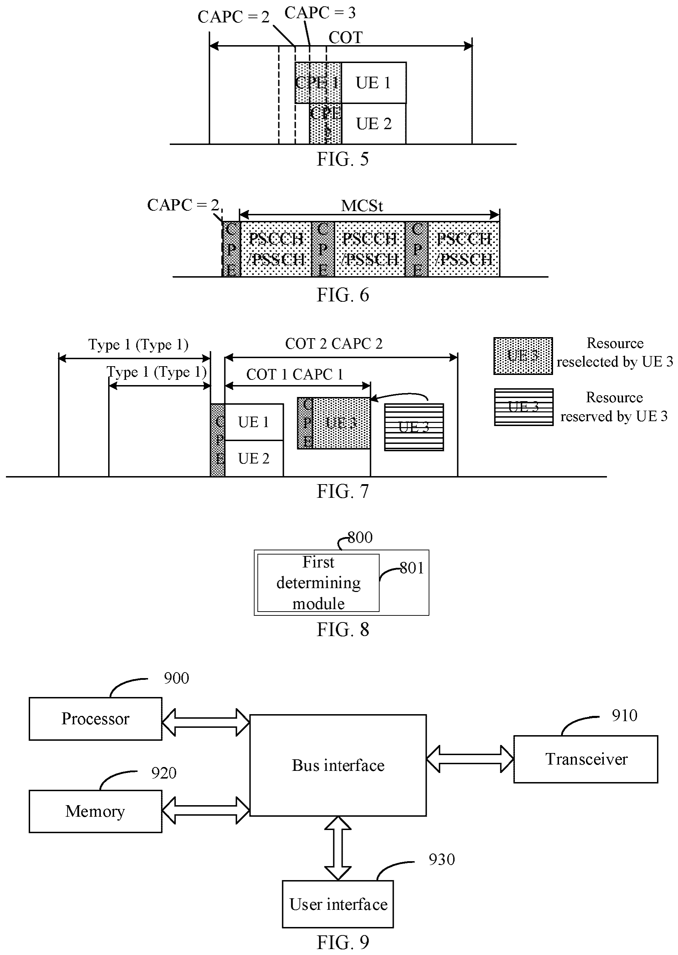

For example, as shown in FIG. 5, it is assumed that the UE 1 is to perform a transmission whose CAPC is 2, and the UE 2 is to perform a transmission whose CAPC is 3, the UE 1 and the UE 2 may respectively determine, based on a CPE starting position to which the CAPC 2 is mapped and a CPE starting position to which the CAPC 3 is mapped, positions used to transmit CPEs.

Optionally, during specific implementation, for a terminal that uses the Type 2 (second channel access type) channel access manner, or a terminal that shares a segment of channel occupancy, a CPE starting position of a transmission of the terminal may be determined based on a CAPC or a PPPP value corresponding to a transmission of a terminal that initiates shared channel occupancy.

For example, if it is assumed that the UE 1 whose CAPC is 2 accesses a channel in the Type 2 channel access manner, and shares channel occupancy information with the UE 2 whose CAPC is 1, a CPE starting position of a transmission of the UE 2 may be determined based on a CAPC (that is, CAPC = 2) of a transmission of the UE 1, when the UE 2 performs the transmission in the COT.

In the foregoing embodiment, the default second CPE starting position is used, it may be ensured that CPE starting positions used for transmissions are the same, thereby resolving a problem that because two transmissions are located in a same slot but have different CPE lengths, a transmission with a shorter CPE length is discarded due to an LBT failure. Alternatively, the CPE starting position is determined based on a CAPC or a PPPP value of the first transmission, so that a transmission with a higher priority may access a channel preferentially, thereby ensuring a reliable transmission of a delay-sensitive (that is, having a higher requirement for a delay) service. Alternatively, one CPE starting position is randomly selected from preconfigured CPE starting positions, so that the CPE starting position can be determined simpler and more efficient. The CPE starting position of the first transmission is determined based on a CAPC or a PPPP value of the second transmission or an indicated CPE starting position, it can be ensured that a same CPE starting position is used within one COT, thereby resolving the problem that because two transmissions are located in a same slot but have different CPE lengths, a transmission with a shorter CPE length is discarded due to an LBT failure. Further, a COT with a higher priority/a longer CPE may occupy a channel preferentially, thereby ensuring the reliability of a transmission of a service with a high priority/a delay-sensitive service.

Case 3: The first transmission has at least two pieces of available shared channel occupancy information.

In an embodiment, in the foregoing Step 101, the process of determining, based on the transmission type information, the CPE starting position corresponding to the target transmission resource of the first transmission includes:
when the first transmission has at least two pieces of available shared channel occupancy information, determining that the CPE starting position corresponding to the transmission resource of the first transmission is one of the following:
a default third CPE starting position;
a CPE starting position that is randomly selected from preconfigured CPE starting positions;
a CPE starting position to which a CAPC of the first transmission is mapped;
a CPE starting position to which a PPPP of the first transmission is mapped;
a CPE starting position to which a CAPC of target shared channel occupancy information is mapped;
a CPE starting position of a PPPP of the target shared channel occupancy information is mapped; or
a CPE starting position indicated in the target shared channel occupancy information;
where the target shared channel occupancy information is one of the following:
   one piece of shared channel occupancy information that is randomly selected from the at least two pieces of available shared channel occupancy information;
   shared channel occupancy information with the highest PPPP value in the at least two pieces of available shared channel occupancy information;
   shared channel occupancy information with the lowest PPPP value in the at least two pieces of available shared channel occupancy information;
   shared channel occupancy information with the highest CAPC in the at least two pieces of available shared channel occupancy information;
   shared channel occupancy information with the lowest CAPC in the at least two pieces of available shared channel occupancy information;
   shared channel occupancy information with the earliest CPE starting position in the at least two pieces of available shared channel occupancy information; or
   shared channel occupancy information with the latest CPE starting position in the at least two pieces of available shared channel occupancy information.

Optionally, during specific implementation, for a first transmission with a plurality of pieces of available channel occupancy information at the same time, the CPE starting position corresponding to the target transmission resource of the first transmission includes one of the following:
a default third CPE starting position;
a CPE starting position that is randomly selected from preconfigured CPE starting positions;
a CPE starting position to which a CAPC of the first transmission is mapped;
a CPE starting position to which a PPPP of the first transmission is mapped;
a CPE starting position to which the highest CAPC in a plurality of COTs is mapped;
a CPE starting position to which the lowest CAPC in the plurality of COTs is mapped;
a CPE starting position to which a CAPC of one piece of shared channel occupancy information randomly selected from a plurality of COTs is mapped;
a CPE starting position to which a PPPP value with the highest packet priority in the plurality of COTs is mapped;
a CPE starting position to which a PPPP value with the lowest packet priority in the plurality of COTs is mapped;
a CPE starting position to which a PPPP value of one piece of shared channel occupancy information randomly selected from the plurality of COTs is mapped;
a CPE starting position indicated by shared channel occupancy information with the highest CAPC in the plurality of COTs;
a CPE starting position indicated by shared channel occupancy information with the lowest CAPC in the plurality of COTs;
a CPE starting position indicated by shared channel occupancy information with the highest data packet priority in the plurality of COTs;
a CPE starting position indicated by shared channel occupancy information with the lowest data packet priority in the plurality of COTs;
a CPE starting position indicated by one piece of shared channel occupancy information randomly selected from the plurality of COTs;
a CPE starting position indicated by shared channel occupancy information with the earliest CPE starting position in the plurality of COTs; or
a CPE starting position indicated by shared channel occupancy information with the latest CPE starting position in the plurality of COTs.

In the foregoing embodiment, when there are a plurality of available COTs, a target COT may be determined based on a rule related to a CAPC, a proximity per-packet priority (PPPP), and the like, and a CPE starting position is further determined based on the target COT.

Case 4: The first transmission is the multi-consecutive slots transmission (MCSt).

In Implementation 1, in the foregoing Step 101, when the first transmission is the multi-consecutive slots transmission, the CPE starting position corresponding to the transmission resource of the first transmission includes one of the following:
a default first CPE starting position;
a CPE starting position that is randomly selected from preconfigured CPE starting positions;
a CPE starting position to which a channel access priority class CAPC of the first transmission is mapped;
a CPE starting position to which a proximity per-packet priority PPPP of the first transmission is mapped;
an end position of a PSCCH transmission in a previous slot;
an end position of a PSSCH transmission in the previous slot;
an end position of a physical sidelink feedback channel PSFCH transmission in the previous slot;
a position whose interval from the end position of the PSCCH transmission in the previous slot is less than or equal to a first value;
a position whose interval from the end position of the PSSCH transmission in the previous slot is less than or equal to a second value; or
a position whose interval from the end position of the PSFCH transmission in the previous slot is less than or equal to a third value.

In Implementation 2, in the foregoing Step 101, when the first transmission is the multi-consecutive slots transmission, the CPE starting position corresponding to the transmission resource of the first transmission includes one of the following:
a default second CPE starting position;
a CPE starting position that is randomly selected from preconfigured CPE starting positions;
a CPE starting position to which a CAPC of the first transmission is mapped;
a CPE starting position to which a PPPP of the first transmission is mapped;
a CPE starting position to which a CAPC of a second transmission is mapped, where the second transmission is a transmission of a second terminal that initiates shared channel occupancy;
a CPE starting position to which a PPPP of the second transmission is mapped;
a CPE starting position indicated in the shared channel occupancy information;
an end position of a PSCCH transmission in a previous slot;
an end position of a PSSCH transmission in the previous slot;
an end position of a physical sidelink feedback channel PSFCH transmission in the previous slot;
a position whose interval from the end position of the PSCCH transmission in the previous slot is less than or equal to a first value;
a position whose interval from the end position of the PSSCH transmission in the previous slot is less than or equal to a second value; or
a position whose interval from the end position of the PSFCH transmission in the previous slot is less than or equal to a third value.

In Implementation 3, in the foregoing Step 101, when the first transmission is the multi-consecutive slots transmission, the CPE starting position corresponding to the transmission resource of the first transmission includes one of the following:
a default third CPE starting position;
a CPE starting position that is randomly selected from preconfigured CPE starting positions;
a CPE starting position to which a CAPC of the first transmission is mapped;
a CPE starting position to which a PPPP of the first transmission is mapped;
a CPE starting position to which a CAPC of target shared channel occupancy information is mapped;
a CPE starting position of a PPPP of the target shared channel occupancy information is mapped;
a CPE starting position indicated in the target shared channel occupancy information;
an end position of a PSCCH transmission in a previous slot;
an end position of a PSSCH transmission in the previous slot;
an end position of a physical sidelink feedback channel PSFCH transmission in the previous slot;
a position whose interval from the end position of the PSCCH transmission in the previous slot is less than or equal to a first value;
a position whose interval from the end position of the PSSCH transmission in the previous slot is less than or equal to a second value; or
a position whose interval from the end position of the PSFCH transmission in the previous slot is less than or equal to a third value.

The target shared channel occupancy information is one of the following:
one piece of shared channel occupancy information that is randomly selected from the at least two pieces of available shared channel occupancy information;
shared channel occupancy information with the highest PPPP value in the at least two pieces of available shared channel occupancy information;
shared channel occupancy information with the lowest PPPP value in the at least two pieces of available shared channel occupancy information;
shared channel occupancy information with the highest CAPC in the at least two pieces of available shared channel occupancy information;
shared channel occupancy information with the lowest CAPC in the at least two pieces of available shared channel occupancy information;
shared channel occupancy information with the earliest CPE starting position in the at least two pieces of available shared channel occupancy information; or
shared channel occupancy information with the latest CPE starting position in the at least two pieces of available shared channel occupancy information.

In Implementation 4, in the foregoing Step 101, when the first transmission is the multi-consecutive slots transmission, the CPE starting position corresponding to the transmission resource of the first transmission includes one of the following:
an end position of a PSCCH transmission in a previous slot;
an end position of a PSSCH transmission in the previous slot;
an end position of a physical sidelink feedback channel PSFCH transmission in the previous slot;
a position whose interval from the end position of the PSCCH transmission in the previous slot being less than or equal to a first value;
a position whose interval from the end position of the PSSCH transmission in the previous slot being less than or equal to a second value; or
a position whose interval from the end position of the PSFCH transmission in the previous slot being less than or equal to a third value.

It should be noted that, for the multi-consecutive slots transmission, in order to ensure that a plurality of consecutive slots are not interrupted, the CPE starting position may be determined in the following manner.

For example, a CPE starting position of a transmission in the 1^{st} slot of the MCSt may be determined by using any one of Implementation 1 to Implementation 4; and for subsequent transmission of the 1^{st} slot, it is determined that a CPE starting position of a current transmission is an end position of a PSCCH/PSSCH in a previous slot, or an interval between the CPE starting position of the current transmission and an end position of a PSCCH/PSSCH in a previous slot is less than or equal to 16 us, thereby ensuring that a plurality of consecutive slots are not interrupted.

For example, a CPE starting position of a transmission in each slot of the MCSt may be determined by using Implementation 4. That is, it is determined that the CPE starting position of a current transmission is an end position of a PSCCH/PSSCH in a previous slot, or an interval between the CPE starting position of the current transmission and an end position of a PSCCH/PSSCH in a previous slot is less than or equal to 16 us, thereby ensuring that a plurality of consecutive slots are not interrupted.

For example, as shown in FIG. 6, a current PSCCH/PSSCH transmission of the UE is an MCSt transmission, the UE determines, based on a CAPC (CAPC = 2 shown in FIG. 6) of the current transmission, a CPE starting position of a transmission in the 1^{st} slot. For subsequent transmission of the 1^{st} slot, the UE determines that a CPE starting position of a current transmission is a position at which a PSCCH/PSSCH transmission in a previous slot ends.

It may be understood that, if it is unnecessary to ensure that a plurality of consecutive slots are not interrupted, a CPE starting position of a transmission in each slot of the MCSt may be determined by using any one of Implementation 1 to Implementation 3.

It should be further noted that, optionally, in Implementation 1 to Implementation 4, the first value, the second value, and the third value may be 16 us.

Optionally, in Implementation 1 to Implementation 4, the default first CPE starting position, the second CPE starting position, and the third CPE starting position are fixed CPE starting positions configured or preconfigured by a higher layer. The first CPE starting position, the second CPE starting position, and the third CPE starting position may be the same, or may be different from each other.

In an embodiment, the target transmission resource includes a currently determined transmission resource, or a transmission resource determined based on a reevaluation result.

It should be explained that the determined transmission resource includes at least one of the following: a periodically reserved resource, a retransmission resource reserved in an initial transmission, a non-periodically selected resource, or a randomly selected resource.

An embodiment of resource reevaluation is described as follows.

In an embodiment, when the target transmission resource is the transmission resource determined based on the reevaluation result, a method for performing resource reevaluation includes:
when the determined transmission resource of the first transmission is not located in a first target COT, performing resource reevaluation on the determined transmission resource of the first transmission, where the first target COT includes at least one available COT, a COT with the highest CAPC in a plurality of available COTs, a COT with the lowest PPPP value in the plurality of available COTs, or a COT with the earliest CPE starting position in the plurality of available COTs; and
determining the target transmission resource based on the resource reevaluation result.

It should be noted that, an instant at which resource reevaluation is performed on the determined transmission resource of the first transmission may be any instant after reception of shared channel occupancy information and before the currently determined transmission resource.

Further, in an embodiment, the process of determining the target transmission resource based on the resource reevaluation result includes:
when it is determined, based on the resource reevaluation result, that there is an available resource in the first target COT, triggering resource reselection in the first target COT to determine the target transmission resource; or
when it is determined, based on the resource reevaluation result, that there is no available resource in the first target COT, performing one of the following:
determining the currently determined transmission resource as the target transmission resource;
selecting a first COT with an available resource from the plurality of available COTs in descending order of CAPC, and triggering resource reselection in the first COT to determine the target transmission resource;
selecting a second COT with an available resource from the plurality of available COTs in descending order of PPPP priorities, and triggering resource reselection in the second COT to determine the target transmission resource; or
selecting a third COT with an available resource from the plurality of available COTs in an order of CPE starting positions from earliest to latest, and triggering resource reselection in the third COT to determine the target transmission resource.

For example, when the first target COT includes at least one available COT, a process of reevaluating a resource may include the following steps 1 to 5.

Step 1: it is determined whether a currently determined transmission resource is located in at least one COT; and a determination result is positive, step 2 is performed; otherwise, step 3 is performed.

Step 2: a CPE starting position is determined based on any embodiment in the foregoing cases 1 to 4, and a current transmission is performed.

The CPE starting position is associated with a COT in which the current transmission is located, for example, is a CPE starting position to which a CAPC of the COT in which the current transmission is located is mapped.

Step 3: resource reevaluation is performed to determine a new candidate resource set, and it is determined whether an available transmission resource in the COT exists in the new candidate resource set; and a determination result is positive, step 4 is performed; otherwise, step 5 is performed.

Step 4: resource reselection it triggered to select a target transmission resource from resources in the new candidate resource set that are located in the COT.

Step 5: the currently determined transmission resource is determined as the target transmission resource.

In the foregoing example, for a transmission with no available shared channel occupancy information, the terminal can only perform the Type 1 channel access manner. In this case, channel access consumes a relatively long time, and it cannot be ensured that access can be completed before a selected resource, which may result in a packet loss. In the foregoing embodiment, a transmission resource is configured to be located in at least one available COT, thereby effectively improving channel access efficiency and data packet transmission reliability.

Further, when there are a plurality of COTs available to the terminal, the transmission resource may be selected from one of the COTs, for example, a COT with the highest CAPC or the lowest PPPP value, to ensure a reliable data transmission.

For example, the terminal may perform the following steps 1 to 6.

Step 1: it is determined whether a currently determined transmission resource is in a COT with the highest CAPC; and a determination result is positive, step 2 is performed; otherwise, step 3 is performed.

Step 2: a CPE starting position is determined, and a current transmission is performed.

The CPE starting position is associated with a COT in which the current transmission is located, for example, is a CPE starting position to which a CAPC of the COT in which the current transmission is located is mapped.

Step 3: resource reevaluation is performed to determine a new candidate resource set; and it is determined whether an available transmission resource in the COT with the highest CAPC exists the new candidate resource set; and if a determination result is positive, step 4 is performed; otherwise, step 5 is performed.

Step 4: resource reselection is triggered to select a target transmission resource from resources in the new candidate resource set that are located in the COT with the highest CAPC.

Step 5: it is determined whether the currently determined transmission resource is located in a COT with the second highest CAPC, and Step 3 to Step 5 are performed repeatedly until the target transmission resource is reselected in the COT; and if an available transmission resource in the COT is still not found when a COT with the lowest CAPC is traversed, step 6 is performed.

Step 6: the currently determined transmission resource is determined as the target transmission resource.

For example, as shown in FIG. 7, a transmission of UE 3 includes two available COTs, where a COT 1 is initiated by the UE 1 and a CAPC of the COT 1 is 1; and a COT 2 is initiated by the UE 2 and a CAPC of the COT 2 is 2. If the UE 3 determines that a determined transmission resource (for example, a reserved resource) is not located in the COT with the highest CAPC, the UE 3 performs resource reevaluation to determine whether there is an available transmission resource in the COT 1. When determining that there is an available transmission resource in the COT 1, the UE 3 triggers resource reselection to reselect a target transmission resource from available resources in the COT 1.

In the foregoing solution, how a sidelink terminal operating on an unlicensed frequency band determines a CPE starting position before performing a transmission is described, and a manner for determining the CPE starting position when the terminal has a plurality of pieces of available shared channel occupancy information is further provided, thereby ensuring fairness of sidelink channel access, and improving transmission reliability of the sidelink terminal operating on the unlicensed frequency band, so that the foregoing solution is more applicable to a transmission of the sidelink terminal operating on the unlicensed frequency band.

### Embodiment 2

As shown in FIG. 8, an embodiment of the present application provides an apparatus 800 for determining a cyclic prefix extension. The apparatus is applied to a first terminal and includes a first determining module.

The first determining module is configured to determine, based on transmission type information that is satisfied by a first transmission, a cyclic prefix extension CPE starting position corresponding to a target transmission resource of the first transmission.

The transmission type information includes at least one of the following:
being a transmission after channel access is performed by Type 1 channel access procedure;
being a transmission after channel access is performed by Type 2 channel access procedure;
having no available shared channel occupancy information;
having one piece of available shared channel occupancy information;
having at least two pieces of available shared channel occupancy information; or
being a multi-consecutive slots transmission.

Optionally, the first determining module includes:
a first determining sub-module, configured to: when the first transmission is the transmission after the first channel access type, and/or the first transmission has no available shared channel occupancy information, determine that the CPE starting position corresponding to the transmission resource of the first transmission is one of the following:
a default first CPE starting position;
a CPE starting position that is randomly selected from preconfigured CPE starting positions;
a CPE starting position to which a channel access priority class CAPC of the first transmission is mapped; or
a CPE starting position to which a proximity per-packet priority PPPP of the first transmission is mapped.

Optionally, the first determining module includes:
a second determining sub-module, configured to: when the first transmission is the transmission after the second channel access type, and/or the first transmission has one piece of available shared channel occupancy information, determine that the CPE starting position corresponding to the target transmission resource of the first transmission is one of the following:
a default second CPE starting position;
a CPE starting position that is randomly selected from preconfigured CPE starting positions;
a CPE starting position to which a CAPC of the first transmission is mapped;
a CPE starting position to which a PPPP of the first transmission is mapped;
a CPE starting position to which a CAPC of a second transmission is mapped, where the second transmission is a transmission of a second terminal that initiates shared channel occupancy;
a CPE starting position to which a PPPP of the second transmission is mapped; or
a CPE starting position indicated in the shared channel occupancy information.

Optionally, the first determining module includes:
a third determining sub-module, configured to: when the first transmission has at least two pieces of available shared channel occupancy information, determine that the CPE starting position corresponding to the target transmission resource of the first transmission is one of the following:
a default third CPE starting position;
a CPE starting position that is randomly selected from preconfigured CPE starting positions;
a CPE starting position to which a CAPC of the first transmission is mapped;
a CPE starting position to which a PPPP of the first transmission is mapped;
a CPE starting position to which a CAPC of target shared channel occupancy information is mapped;
a CPE starting position of a PPPP of the target shared channel occupancy information is mapped; or
a CPE starting position indicated in the target shared channel occupancy information.

The target shared channel occupancy information is one of the following:
one piece of shared channel occupancy information that is randomly selected from the at least two pieces of available shared channel occupancy information;
shared channel occupancy information with the highest PPPP value in the at least two pieces of available shared channel occupancy information;
shared channel occupancy information with the lowest PPPP value in the at least two pieces of available shared channel occupancy information;
shared channel occupancy information with the highest CAPC in the at least two pieces of available shared channel occupancy information;
shared channel occupancy information with the lowest CAPC in the at least two pieces of available shared channel occupancy information;
shared channel occupancy information with the earliest CPE starting position in the at least two pieces of available shared channel occupancy information; or
shared channel occupancy information with the latest CPE starting position in the at least two pieces of available shared channel occupancy information.

Optionally, the first transmission includes at least one of the following:
a current physical sidelink control channel PSCCH transmission;
a current physical sidelink shared channel PSSCH transmission;
a transmission in any slot in the multi-consecutive slots transmission; or
a transmission in the 1^{st} slot in the multi-consecutive slots transmission.

Optionally, when the first transmission is the multi-consecutive slots transmission, the CPE starting position corresponding to the target transmission resource of the first transmission further includes at least one of the following:
an end position of a PSCCH transmission in a previous slot;
an end position of a PSSCH transmission in the previous slot;
an end position of a physical sidelink feedback channel PSFCH transmission in the previous slot;
a position whose interval from the end position of the PSCCH transmission in the previous slot is less than or equal to a first value;
a position whose interval from the end position of the PSSCH transmission in the previous slot is less than or equal to a second value; or
a position whose interval from the end position of the PSFCH transmission in the previous slot is less than or equal to a third value.

Optionally, the target transmission resource includes a currently determined transmission resource, or a transmission resource determined based on a reevaluation result.

Optionally, the apparatus 800 further includes: a first revaluation module and a second determining module.

The reevaluation module is configured to: when the determined transmission resource of the first transmission is not located in a first target COT, perform resource reevaluation on the determined transmission resource of the first transmission. The first target COT includes at least one available COT, a COT with the highest CAPC in the plurality of available COTs, a COT with the lowest PPPP value in a plurality of available COTs, or a COT with the earliest CPE starting position in the plurality of available COTs.

The second determining module is configured to determine the target transmission resource based on the resource reevaluation result.

Optionally, the second determining module includes: a fourth determining submodule or a fifth determining submodule.

The fourth determining submodule is configured to: when it is determined, based on the resource reevaluation result, that there is an available resource in the first target COT, trigger resource reselection in the first target COT to determine the target transmission resource.

The fifth determining submodule, configured to: if it is determined, based on the resource reevaluation result, that there is no available resource in the first target COT, perform one of the following:
determining the currently determined transmission resource as the target transmission resource;
selecting a first COT with an available resource from the plurality of available COTs in descending order of CAPC, and triggering resource reselection in the first COT to determine the target transmission resource;
selecting a second COT with an available resource from the plurality of available COTs in descending order of PPPP priorities, and triggering resource reselection in the second COT to determine the target transmission resource; or
selecting a third COT with an available resource from the plurality of available COTs in an order of CPE starting positions from earliest to latest, and triggering resource reselection in the third COT to determine the target transmission resource.

Embodiment 2 of the present application corresponds to the method in Embodiment 1. All implementations in Embodiment 1 are applicable to this embodiment of the apparatus for determining a cyclic prefix extension, and same technical effects can also be achieved.

### Embodiment 3

To better implement the foregoing objectives, as shown in FIG. 9, Embodiment 3 of the present application further provides a first terminal. The first terminal includes:
a processor 900, and a memory 920 connected to the processor 900 by using a bus interface. The memory 920 is configured to store a program and data that are used when the processor 900 performs operations, and the processor 900 invokes and executes the program and data that are stored in the memory 920.

A transceiver 910 is connected to the bus interface, and is configured to receive and transmit data under control of the processor 900. The processor 900 is configured to read the program in the memory 920 to implement the following step:
determining, based on transmission type information that is satisfied by a first transmission, a cyclic prefix extension CPE starting position corresponding to a target transmission resource of the first transmission.

The transmission type information includes at least one of the following:
being a transmission after channel access is performed by Type 1 channel access procedure;
being a transmission after channel access is performed by Type 2 channel access procedure;
having no available shared channel occupancy information;
having one piece of available shared channel occupancy information;
having at least two pieces of available shared channel occupancy information; or
being a multi-consecutive slots transmission.

In FIG. 9, a bus architecture may include any quantity of interconnected buses and bridges, and specifically interconnect various circuits of one or more processors represented by the processor 900 and a memory represented by the memory 920. The bus architecture may further interconnect various other circuits such as a peripheral device, a voltage regulator, and a power management circuit. These are all well known in the art, and therefore are not further described in this specification. The bus interface provides an interface. The transceiver 910 may be a plurality of elements, including a transmitter and a transceiver, and provides units for communicating with a variety of other apparatuses on a transmission medium. For different terminals, a user interface 930 may alternatively be an interface capable of externally or internally connecting a required device, and the connected device includes, but is not limited to, a keypad, a display, a speaker, a microphone, a joystick, or the like. The processor 900 is responsible for the management of the bus architecture and general processing, and the memory 920 may store data for use by the processor 900 when the processor 900 performs operations.

Optionally, the processor 900 is configured to read the program in the memory 920 to implement the following step:
when the first transmission is the transmission after the first channel access type, and/or the first transmission has no available shared channel occupancy information, determining that the CPE starting position corresponding to the transmission resource of the first transmission is one of the following:
a default first CPE starting position;
a CPE starting position that is randomly selected from preconfigured CPE starting positions;
a CPE starting position to which a channel access priority class CAPC of the first transmission is mapped; or
a CPE starting position to which a proximity per-packet priority PPPP of the first transmission is mapped.

Optionally, the processor 900 is configured to read the program in the memory 920 to implement the following step:
when the first transmission is the transmission after the second channel access type, and/or the first transmission has one piece of available shared channel occupancy information, determining that the CPE starting position corresponding to the transmission resource of the first transmission is one of the following:
a default second CPE starting position;
a CPE starting position that is randomly selected from preconfigured CPE starting positions;
a CPE starting position to which a CAPC of the first transmission is mapped;
a CPE starting position to which a PPPP of the first transmission is mapped;
a CPE starting position to which a CAPC of a second transmission is mapped, where the second transmission is a transmission of a second terminal that initiates shared channel occupancy;
a CPE starting position to which a PPPP of the second transmission is mapped; or
a CPE starting position indicated in the shared channel occupancy information.

Optionally, the processor 900 is configured to read the program in the memory 920 to implement the following step:
when the first transmission has at least two pieces of available shared channel occupancy information, determining that the CPE starting position corresponding to the transmission resource of the first transmission is one of the following:
a default third CPE starting position;
a CPE starting position that is randomly selected from preconfigured CPE starting positions;
a CPE starting position to which a CAPC of the first transmission is mapped;
a CPE starting position to which a PPPP of the first transmission is mapped;
a CPE starting position to which a CAPC of target shared channel occupancy information is mapped;
a CPE starting position of a PPPP of the target shared channel occupancy information is mapped; or
a CPE starting position indicated in the target shared channel occupancy information.

The target shared channel occupancy information is one of the following:
one piece of shared channel occupancy information that is randomly selected from the at least two pieces of available shared channel occupancy information;
shared channel occupancy information with the highest PPPP value in the at least two pieces of available shared channel occupancy information;
shared channel occupancy information with the lowest PPPP value in the at least two pieces of available shared channel occupancy information;
shared channel occupancy information with the highest CAPC in the at least two pieces of available shared channel occupancy information;
shared channel occupancy information with the lowest CAPC in the at least two pieces of available shared channel occupancy information;
shared channel occupancy information with the earliest CPE starting position in the at least two pieces of available shared channel occupancy information; or
shared channel occupancy information with the latest CPE starting position in the at least two pieces of available shared channel occupancy information.

Optionally, the first transmission includes at least one of the following:
a current physical sidelink control channel PSCCH transmission;
a current physical sidelink shared channel PSSCH transmission;
a transmission in any slot in the multi-consecutive slots transmission; or
a transmission in the 1^{st} slot in the multi-consecutive slots transmission.

Optionally, when the first transmission is the multi-consecutive slots transmission, it is determined that the CPE starting position corresponding to the target transmission resource of the first transmission further includes at least one of the following:
an end position of a PSCCH transmission in a previous slot;
an end position of a PSSCH transmission in the previous slot;
an end position of a physical sidelink feedback channel PSFCH transmission in the previous slot;
a position whose interval from the end position of the PSCCH transmission in the previous slot is less than or equal to a first value;
a position whose interval from the end position of the PSSCH transmission in the previous slot is less than or equal to a second value; or
a position whose interval from the end position of the PSFCH transmission in the previous slot is less than or equal to a third value.

Optionally, the target transmission resource includes a currently determined transmission resource, or a transmission resource determined based on a reevaluation result.

Optionally, the processor 900 is configured to read the program in the memory 920 to implement the following steps:
when the determined transmission resource of the first transmission is not located in a first target COT, performing resource reevaluation on the determined transmission resource of the first transmission, where the first target COT includes at least one available COT, a COT with the highest CAPC in a plurality of available COTs, a COT with the lowest PPPP value in the plurality of available COTs, or a COT with the earliest CPE starting position in the plurality of available COTs; and
determining the target transmission resource based on the resource reevaluation result.

Optionally, the processor 900 is configured to read the program in the memory 920 to implement the following step:
when it is determined, based on the resource reevaluation result, that there is an available resource in the first target COT, triggering resource reselection in the first target COT to determine the target transmission resource; or
if it is determined, based on the resource reevaluation result, that there is no available resource in the first target COT, performing one of the following:
   determining the currently determined transmission resource as the target transmission resource;
   selecting a first COT with an available resource from the plurality of available COTs in descending order of CAPC, and triggering resource reselection in the first COT to determine the target transmission resource;
   selecting a second COT with an available resource from the plurality of available COTs in descending order of PPPP priorities, and triggering resource reselection in the second COT to determine the target transmission resource; or
   selecting a third COT with an available resource from the plurality of available COTs in an order of CPE starting positions from earliest to latest, and triggering resource reselection in the third COT to determine the target transmission resource.

In the embodiments of the present application, the CPE starting position corresponding to the target transmission resource of the first transmission is determined based on the transmission type information that is satisfied by the first transmission. In this way, the terminal can independently determine a CPE length without assistance from a base station, thereby ensuring that a sidelink service on an unlicensed frequency band can be transmitted in a timely and reliable manner.

A person skilled in the art may understand that all or some of the steps of the foregoing embodiments may be implemented by hardware, or may be implemented by a computer program indicating related hardware, and the computer program includes instructions for executing some or all of the steps of the foregoing methods. In addition, the computer program may be stored in a readable storage medium, and the storage medium may be any form of storage medium.

In addition, a specific embodiment of the present application further provides a computer-readable storage medium on which a computer program is stored. When the program is executed by a processor, steps of the method in Embodiment 1 are implemented. A same technical effect can be achieved. To avoid repetition, details are not described herein again.

In addition, it should be noted that, in the apparatus and method of the present application, it is evident that each component or step may be decomposed and/or recombined. The decomposition and/or the recombination shall be considered as equivalent solutions to the present application. In addition, the steps for performing the foregoing series of processing may be performed in a chronological order as described, but do not necessarily need to be performed in a chronological order, and some of the steps may be performed in parallel or independently of one another. A person of ordinary skill in the art can understand that all or any of the steps or components of the methods and apparatuses of the present application may be implemented in any computing apparatus (including a processor, a storage medium, or the like) or a network of a computing apparatus by using hardware, firmware, software, or a combination thereof, which can be implemented by a person of ordinary skill in the art by using their basic programming skills when reading the descriptions of the present application.

Therefore, the objectives of the present application may also be achieved by running a program or a group of programs on any computing apparatus. The computing apparatus may be a well-known general apparatus. Therefore, the objectives of the present application may also be achieved by providing only a program product including program code for implementing the methods or apparatuses. In other words, such a program product is also included in the present application, and a storage medium that stores such a program product is also included in the present application. Apparently, the storage medium may be any well-known storage medium or any storage medium to be developed in the future. It should also be noted that in the apparatuses and methods of the present application, it is evident that each component or step may be decomposed and/or recombined. The decomposition and/or the recombination shall be considered as equivalent solutions to the present application. In addition, the steps for performing the foregoing series of processing may be performed in a chronological order as described, but do not necessarily need to be performed in a chronological order. Some of the steps may be performed in parallel or independently of one another.

The foregoing descriptions are optional implementations of the present application. It should only be noted that those of ordinary skill in the art may further make various improvements and modifications without departing from the principles of the present application, and these improvements and modifications also fall within the protection scope of the present application.

## Claims

1. A method for determining a cyclic prefix extension, applied to a first terminal, wherein the method comprises:
determining, based on transmission type information that is satisfied by a first transmission, a cyclic prefix extension CPE starting position corresponding to a target transmission resource of the first transmission;
wherein the transmission type information comprises at least one of the following:
being a transmission after channel access is performed by Type 1 channel access procedure;
being a transmission after channel access is performed by Type 2 channel access procedure;
having no available shared channel occupancy information;
having one piece of available shared channel occupancy information;
having at least two pieces of available shared channel occupancy information; or
being a multi-consecutive slots transmission.

2. The method for determining a cyclic prefix extension according to claim 1, wherein the determining, based on the transmission type information, the CPE starting position corresponding to the target transmission resource of the first transmission comprises:
when the first transmission is the transmission after the first channel access type, and/or the first transmission has no available shared channel occupancy information, determining that the CPE starting position corresponding to the target transmission resource of the first transmission comprises one of the following:
a default first CPE starting position;
a CPE starting position that is randomly selected from preconfigured CPE starting positions;
a CPE starting position to which a channel access priority class CAPC of the first transmission is mapped; or
a CPE starting position to which a proximity per-packet priority PPPP of the first transmission is mapped.

3. The method for determining a cyclic prefix extension according to claim 1, wherein the determining, based on the transmission type information, the CPE starting position corresponding to the target transmission resource of the first transmission comprises:
when the first transmission is the transmission after the second channel access type, and/or the first transmission has one piece of available shared channel occupancy information, determining that the CPE starting position corresponding to the target transmission resource of the first transmission comprises one of the following:
a default second CPE starting position;
a CPE starting position that is randomly selected from preconfigured CPE starting positions;
a CPE starting position to which a CAPC of the first transmission is mapped;
a CPE starting position to which a PPPP of the first transmission is mapped;
a CPE starting position to which a CAPC of a second transmission is mapped, wherein the second transmission is a transmission of a second terminal that initiates shared channel occupancy;
a CPE starting position to which a PPPP of the second transmission is mapped; or
a CPE starting position indicated in the shared channel occupancy information.

4. The method for determining a cyclic prefix extension according to claim 1, wherein the determining, based on the transmission type information, the CPE starting position corresponding to the target transmission resource of the first transmission comprises:
when the first transmission has at least two pieces of available shared channel occupancy information, determining that the CPE starting position corresponding to the transmission resource of the first transmission comprises one of the following:
a default third CPE starting position;
a CPE starting position that is randomly selected from preconfigured CPE starting positions;
a CPE starting position to which a CAPC of the first transmission is mapped;
a CPE starting position to which a PPPP of the first transmission is mapped;
a CPE starting position to which a CAPC of target shared channel occupancy information is mapped;
a CPE starting position to which a PPPP of the target shared channel occupancy information is mapped; or
a CPE starting position indicated in the target shared channel occupancy information;
wherein the target shared channel occupancy information comprises one of the following:
one piece of shared channel occupancy information that is randomly selected from the at least two pieces of available shared channel occupancy information;
shared channel occupancy information with a highest PPPP value in the at least two pieces of available shared channel occupancy information;
shared channel occupancy information with a lowest PPPP value in the at least two pieces of available shared channel occupancy information;
shared channel occupancy information with a highest CAPC in the at least two pieces of available shared channel occupancy information;
shared channel occupancy information with a lowest CAPC in the at least two pieces of available shared channel occupancy information;
shared channel occupancy information with an earliest CPE starting position in the at least two pieces of available shared channel occupancy information; or
shared channel occupancy information with a latest CPE starting position in the at least two pieces of available shared channel occupancy information.

5. The method for determining a cyclic prefix extension according to any one of claims 2 to 4, wherein the first transmission comprises at least one of the following:
a current physical sidelink control channel PSCCH transmission;
a current physical sidelink shared channel PSSCH transmission;
a transmission in any slot in the multi-consecutive slots transmission; or
a transmission in a 1^{st} slot in the multi-consecutive slots transmission.

6. The method for determining a cyclic prefix extension according to any one of claims 1 to 4, wherein when the first transmission is the multi-consecutive slots transmission, the CPE starting position corresponding to the target transmission resource of the first transmission further comprises at least one of the following:
an end position of a PSCCH transmission in a previous slot;
an end position of a PSSCH transmission in the previous slot;
an end position of a physical sidelink feedback channel PSFCH transmission in the previous slot;
a position whose interval from the end position of the PSCCH transmission in the previous slot is less than or equal to a first value;
a position whose interval from the end position of the PSSCH transmission in the previous slot is less than or equal to a second value; or
a position whose interval from the end position of the PSFCH transmission in the previous slot being less than or equal to a third value.

7. The method for determining a cyclic prefix extension according to claim 1, wherein the target transmission resource comprises a currently determined transmission resource, or a transmission resource determined based on a reevaluation result.

8. The method for determining a cyclic prefix extension according to claim 7, wherein when the target transmission resource is the transmission resource determined based on the reevaluation result, resource reevaluation comprises:
when the determined transmission resource of the first transmission is not located in a first target COT, performing resource reevaluation on the determined transmission resource of the first transmission, wherein the first target COT comprises at least one available COT, a COT with a highest CAPC in a plurality of available COTs, a COT with a lowest PPPP value in the plurality of available COTs, or a COT with an earliest CPE starting position in the plurality of available COTs; and
determining the target transmission resource based on a resource reevaluation result.

9. The method for determining a cyclic prefix extension according to claim 8, wherein the determining the target transmission resource based on the resource reevaluation result comprises:
when it is determined, based on the resource reevaluation result, that an available resource is comprised in the first target COT, triggering resource reselection in the first target COT to determine the target transmission resource; or
when it is determined, based on the resource reevaluation result, that no available resource is comprised in the first target COT, performing one of the following:
determining the currently determined transmission resource as the target transmission resource;
selecting a first COT with an available resource from the plurality of available COTs in descending order of CAPC, and triggering resource reselection in the first COT to determine the target transmission resource;
selecting a second COT with an available resource from the plurality of available COTs in descending order of PPPP values, and triggering resource reselection in the second COT to determine the target transmission resource; or
selecting a third COT with an available resource from the plurality of available COTs in an order of CPE starting positions from earliest to latest, and triggering resource reselection in the third COT to determine the target transmission resource.

10. A first terminal, comprising a transceiver, a memory, a processor, and a computer program stored in the memory and runnable on the processor, wherein when the processor executes the computer program, the method for determining a cyclic prefix extension according to any one of claims 1 to 9 is implemented.

11. An apparatus for determining a cyclic prefix extension, applied to a first terminal, wherein the apparatus comprises:
a first determining module, configured to determine, based on transmission type information that is satisfied by a first transmission, a CPE starting position corresponding to a target transmission resource of the first transmission;
wherein the transmission type information comprises at least one of the following:
being a transmission after channel access is performed by Type 1 channel access procedure;
being a transmission after channel access is performed by Type 2 channel access procedure;
having no available shared channel occupancy information;
having one piece of available shared channel occupancy information;
having at least two pieces of available shared channel occupancy information; or
being a multi-consecutive slots transmission.

12. A computer-readable storage medium, wherein the computer-readable storage medium stores a computer program, and when the computer program is executed by a processor, the method for determining a cyclic prefix extension according to any one of claims 1 to 9 is implemented.
